# EUROPEAN PATENT SPECIFICATION

(11) **EP 3 622 797 B1**
(45) Date of publication and mention of the grant of the patent: **30.03.2022**
(21) Application number: 18798833.2
(22) Date of filing: 11.05.2018
(51) Int. Cl.: A01D 34/78, H02K 7/10, A01D 75/20, A01D 34/82, H02K 7/14

(54) **INSULATION STRUCTURE AND MOWER**
ISOLATIONSSTRUKTUR UND MÄHER
STRUCTURE D'ISOLATION ET TONDEUSE

(30) Priority: 12.05.2017 CN 201710332967; 19.05.2017 CN 201710355284
(43) Date of publication of application: 18.03.2020
(73) Proprietor: Skybest Electric Appliance (Suzhou) Co., Ltd., Suzhou, Jiangsu 215000 (CN)
(72) Inventor: KONG, Zhao, Suzhou, Jiangsu 215000 (CN); WEI, Juan, Suzhou, Jiangsu 215000 (CN); ZHANG, Tianrong, Suzhou, Jiangsu 215000 (CN)
(74) Representative: Neilson, Martin Mark
(86) International application number: PCT/CN2018/086437
(87) International publication number: WO 2018/205983

(56) References cited:
- CH-A- 398 164
- CN-U- 203 120 458
- CN-U- 204 180 547
- CN-U- 205 694 486
- CN-Y- 200 958 517
- DE-A1- 4 105 557
- DE-A1- 4 105 557
- DE-C2- 4 105 557
- DE-U1-202015 107 052
- US-A- 3 670 413

## Description

The invention relates to the technical field of electric garden tools, in particular to an insulation structure and a mower with the insulation structure.

Electric mower is one of the most common type of garden tools. Generally, in order to ensure safety in use of the mower, a high voltage AC or DC mower must meet the requirement of double insulation. Double insulation generally includes basic insulation and additional insulation, wherein the basic insulation is a basic protective insulation that provides protection against electric shock for the electrified parts, such as the basic insulation of the motor itself in an electric mower. The additional insulation is an independent insulation provided in addition to the basic insulation, for example the insulation between the blade of the mower and the output shaft of the motor, in order to prevent electric shock in the event of damage or failure of the basic insulation. In the prior art, due to the limitation of cost and design space of most of lawn mowers, double insulation among the motor, the output shaft and the blade assembly is difficult to realize, resulting in potential safety hazards.

DE-A-4105557 discloses a device for fastening rotating fly cutters to the motor shaft of electric lawnmowers in which a cutter coupling is connected or connectable to the motor shaft by means of a central clamping screw. The fly cutter can be conveniently changed in accordance with electrical safety regulations because the clamping screw is received within a cavity located in a coupling body consisting of insulating material such as plastic.

The technical problem to be solved by the present invention is to provide an insulation structure capable of realizing double insulation.

Thus the present invention provides an insulation structure for an electric gardening tool, wherein the electric gardening tool comprises:
a housing;
a motor which is arranged in the housing and used for providing power, wherein the motor comprises an output shaft; and
a blade which is connected with the output shaft, wherein the motor drives the blade to rotate through the output shaft;
wherein the insulation structure is arranged between the output shaft and the blade so as to realize the insulation coupling of the blade and the output shaft, wherein the insulation structure comprises a connecting base, wherein the connecting base comprises a main body portion made of insulation materials, and the main body portion is provided with an output shaft connecting portion in fastening coupling with the output shaft and at least two blade connecting portions in fastening coupling with the blade, wherein the output shaft connecting portion and any one of the blade connecting portions are insulated and isolated from each other, wherein the output shaft is fixedly connected to the output shaft connecting portion through a second fastening member and the blade is fixedly connected to the blade connecting portions through at least two first fastening members, wherein the insulation structure further comprises an insulation cover made of an insulation material, the insulation cover being disposed between the second fastening member and the blade to realize the insulation between the second fastening member and the blade.

Preferably the output shaft is coupled to the output shaft connecting portion from a first side of the connecting base, and the second fastening member is coupled to the output shaft after penetrating through the connecting base from a second side of the connecting base to the first side; the insulation cover forms an inner cavity; the part of the second fastening member which protrudes, towards the second side, out of the surface of the main body portion is accommodated in the inner cavity, the surface facing the second side, and the blade is isolated from the outer part of the inner cavity.

Preferably the insulation cover is detachably connected to the second fastening member.

Preferably the insulation cover has at least one elastic hook, and the main body portion includes at least one clamping slot, wherein the elastic hook is detachably matched and connected with the clamping slot.

Preferably the insulation cover is undetachably connected to the second fastening member.

Preferably the insulation cover has a non-standard end face.

Preferably the output shaft is coupled to the output shaft connecting portion from a first side of the connecting base, and the blade is coupled to the blade connecting portion from a second side of the connecting base.

Preferably the output shaft connecting portion includes a shaft hole extending from the surface, facing the first side, of the main body portion to the second side, and the shaft hole is matched and connected with the output shaft.

Preferably the output shaft connecting portion is configured to include a first cavity extending from the surface, facing the first side, of the main body portion to the second side, and a connecting member fixedly embedded into the first cavity; the connecting member includes a shaft hole extending from the surface, facing the first side, of the connecting member to the second side.

Preferably a first through hole is provided below the shaft hole; the output shaft comprises a second coupling hole extending from the end surface of the output shaft toward the first side, the end surface facing the second side; the first through hole corresponds to the second coupling hole; at least part of the second fastening member is matched and connected with the second coupling hole after penetrating through the first through hole.

Preferably the connecting member is metallic, and the connecting member and the main body portion are integrally injection molded; the connecting member comprises an embedded portion and an extending portion extending from the embedded portion to the first side, and the outer diameter of the embedded portion is larger than that of the extending portion; the first cavity comprises a cavity portion and an opening portion, the inner diameter of the cavity portion is matched with the outer diameter of the embedded portion, and the inner diameter of the opening portion is matched with the outer diameter of the extending portion.

Preferably the blade connecting portion includes a plurality of first coupling holes extending from the surface of the main body portion to the first side, the surface facing the second side, the inner circumferences of the first coupling holes and the outer circumferences of the first fastening members are provided with threads for engaging with each other; the blade comprises second through holes corresponding to the first coupling holes; at least part of the first fastening members are matched and connected with the first coupling holes after penetrating through the second through holes.

Preferably among the plurality of first coupling holes, the lines between at least two first coupling holes and the rotation center of the main body portion are not collinear.

Preferably the outer circumference of the main body portion is provided with a peripheral wall, and the outer circumferences of the first coupling holes are provided with hole walls; a reinforcing rib is arranged on one side of the peripheral wall close to the rotation center of the main body portion, and the reinforcing rib extends along the circumferential direction of the main body portion; the reinforcing rib is divided into a plurality of sections by the first coupling holes, and the extension line from any section of the reinforcing rib to both ends passes through the first coupling holes.

Preferably the extension line from any section of the reinforcing rib to both ends passes through the geometric centers of the first coupling holes.

Preferably the blade connecting portion is configured to include a first coupling hole extending from the surface of the main body portion to the first side, the surface facing the second side, a second cavity provided in the first coupling hole, and a nut fixedly embedded into the second cavity; the nut is metallic and is provided with threads engaged with the first fastening member; the nut and the main body portion are integrally formed in an injection molding mode.

The invention further provides a mower, which comprises any one of the insulation structures described above.

The technical effect that the invention can achieve is to realize a low-cost double insulation, and the electric shock accident will not be caused after the basic insulation of the motor fails.
Fig. 1 is a schematic view of a mower according to an embodiment of the present invention.
Fig. 2 is a partially enlarged view of L1 in Fig. 1.
Fig. 3 is a front view of the motor, the connecting base and the blade and their connection relationship in the mower according to an embodiment of the present invention.
Fig. 4 is an upward view of the motor, the connecting base and the blade and their connection relationship in the mower according to an embodiment of the present invention.
Fig. 5 is a sectional view taken along A-A in Fig. 4.
Fig. 6 is a schematic view of the connecting base in the mower according to an embodiment of the present invention, wherein the upper surface is shown.
Fig. 7 is a schematic view of another perspective view of the connecting base in the mower according to an embodiment of the present invention, wherein the lower surface is shown.
Fig. 8 is a schematic view of the motor rotor in the mower according to an embodiment of the present invention.
Fig. 9 is a schematic view of the insulation cover in the mower according to an embodiment of the present invention.

The invention will be described in detail below with reference to specific embodiments shown in the accompanying drawings. However, these embodiments are not intended to limit the present invention, which is defined by the appended claims.

It should be noted that when an element is referred to as being "fixed" to another element, it can be directly on the other element or there is an intervening element. When an element is referred to as being "connected" to another element, it can be directly connected to the other element or it is possible that there is an intervening element at the same time. The terms "vertical," "horizontal," "up," "down," "left," "right," "front," "rear," and the like are used herein for purposes of illustration only. Unless defined otherwise, all technical and scientific terms used herein have the same meaning as commonly understood by those skilled in the field to which this invention belongs. The terms used herein in the description of the invention is only for the purpose of describing particular embodiments and is not intended to be limiting of the invention. The term "and/or" used herein includes any and all combinations of one or more of the associated listed items.

### Embodiment 1

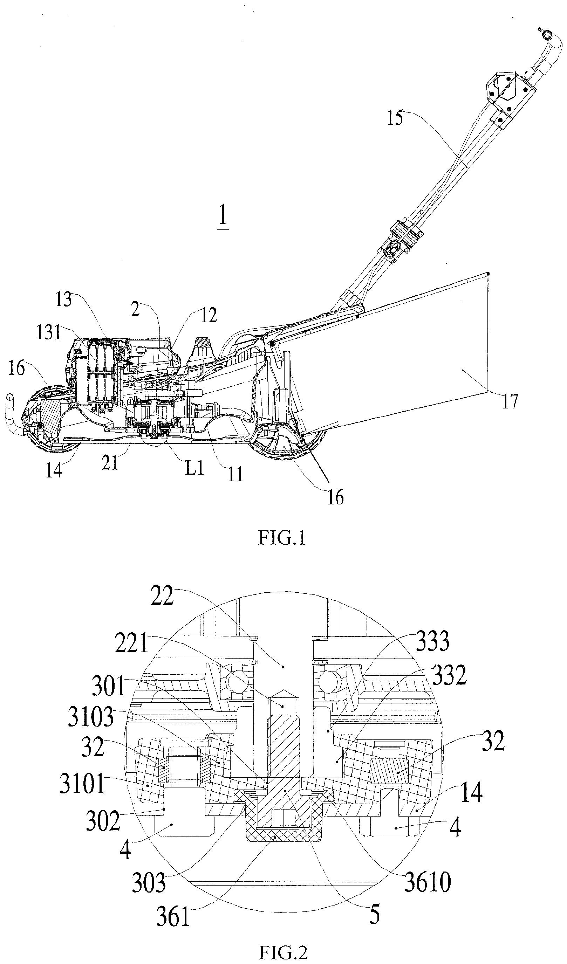

Figs. 1 to 9 show an embodiment of the insulation structure and the mower of the present invention.

One embodiment of the invention discloses a mower 1, referring to Fig. 1, comprising a housing, a push rod 15 connected with the rear portion of the housing and extending backwards and upwards, a travelling wheel 16 arranged at the bottom of the housing, a grass collecting box 17 detachably connected with the rear portion of the housing, a battery cavity arranged in the housing and used for accommodating a battery pack 131, and a motor 2 arranged in the housing, wherein the battery pack 131 supplies power to the motor 2. In other embodiments, the mower is provided with a power line connectable to a city grid, the city grid supplying power to the motor. The motor 2 includes a rotor 23 and an output shaft 22 that rotates in synchronization with the rotor 23. One end of the output shaft 22 is connected with the blade 14, and the motor 2 drives the blade 14 to rotate through the output shaft 22 so as to realize the mowing operation. Typically, the output shaft 22 and the blade 14 are metallic. Specifically, the housing includes a chassis 11 disposed at the bottom, the motor 2 is fixed above the chassis 11 and is substantially perpendicular to the chassis 11, and the output shaft 22 passes through the chassis 11 downward and is connected with the blade 14. In the present embodiment, the lower end cover 21 of the motor 2 is fastened to the chassis 11, and the lower end cover 21 is made of an insulating material. The battery cavity is arranged in a front position relative to the motor 2. The housing further includes a motor cover 12 disposed above the motor and a battery cavity cover 13 disposed above the battery cavity.

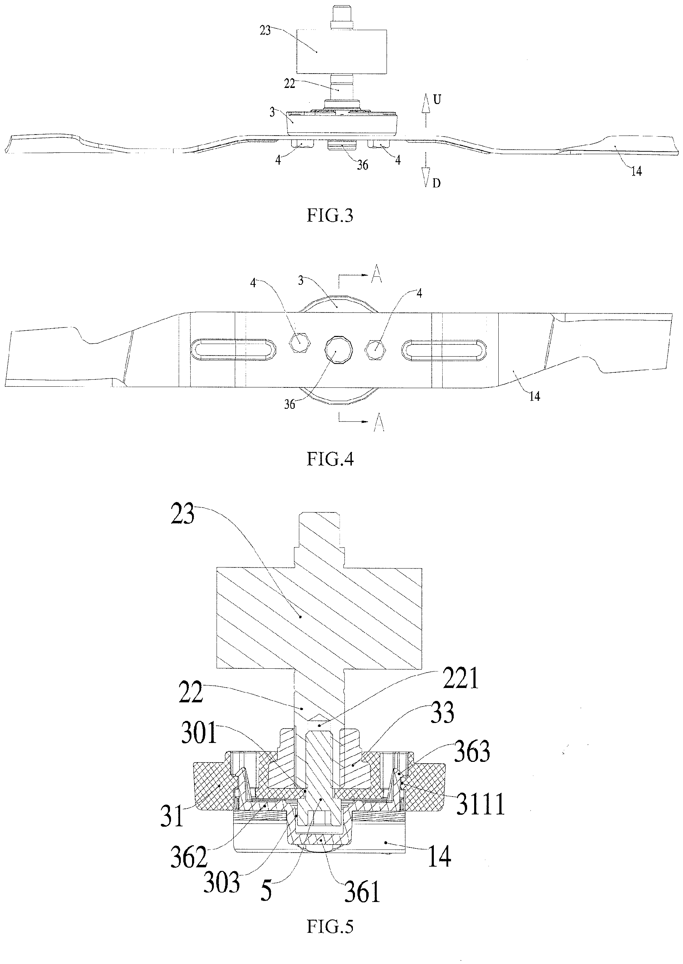

In the present embodiment, referring to Figs. 2 to 9, an insulation structure is provided between the output shaft 22 and the blade 14 to realize an insulation coupling between the blade 14 and the output shaft 22. The insulation structure comprises a connecting base 3, and for the convenience of description, with the connecting base 3 as reference, the side facing towards the motor 2 with respect to the connecting base 3 and correspondingly facing away from the blade 14 (referring to the direction of the arrow U in Fig. 3) is defined as the first side, wherein in Figs. 1 to 9 and when the mower is actually in operation, the first side is the upper side. The side facing the blade 14 with respect to the connecting base 3 and correspondingly facing away from the motor 2 (referring to the direction of the arrow D in Fig. 3) is defined as the second side, wherein in Figs. 1 to 9 and when the mower is actually in operation, the second side is the lower side. Hereinafter, unless specifically stated otherwise, references to "upper surface" refer to the surface facing the first side, "lower surface" refer to the surface facing the second side, "upper" , "up" and "upward" refer to the first side, and "lower", "down" and "downward" refer to the second side. An output shaft connecting portion is provided on the surface of the connecting base 3, wherein the surface faces the first side, and the output shaft 22 is fixedly connected with the connecting base 3 through the output shaft connecting portion. At least one blade connecting portion is provided on the surface of the connecting base 3, wherein the surface faces the second side, and the blade 14 is fixedly connected with the connecting base 3 through the blade connecting portion. The output shaft connecting portion and any one blade connecting portion are not in direct contact and are separated by an insulating material, so that additional insulation between the blade and the output shaft is ensured, namely, when the basic insulation of the motor 2 is invalid, the insulation structure will ensure that the blade is not electrified.

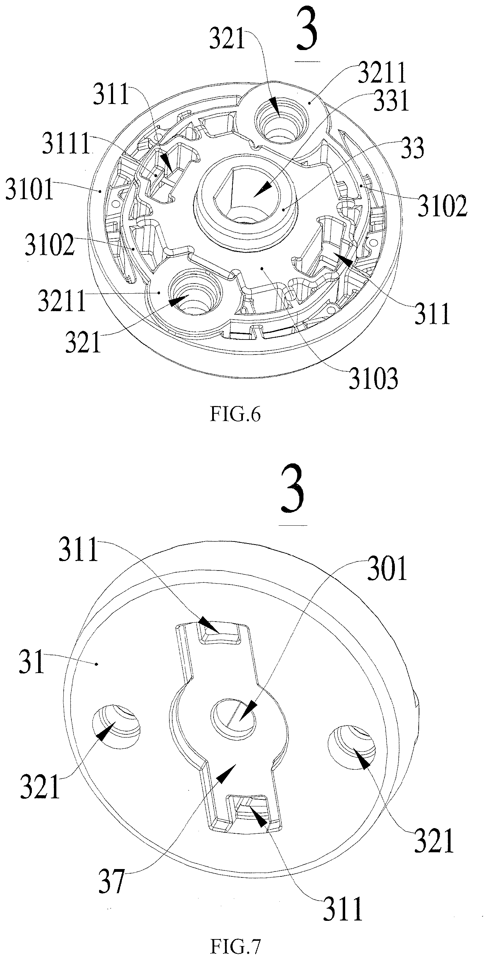

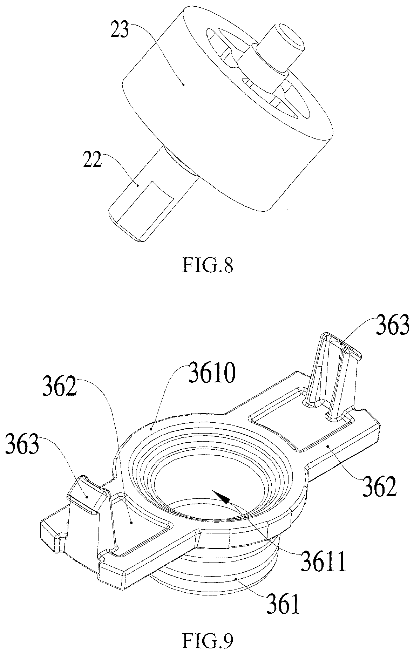

Referring to Figs. 2, 5-7, the connecting base 3 includes a substantially circular main body portion 31 which is made of an insulating material. The output shaft connecting portion is provided on the upper surface of the main body portion 31 at a position close to the rotation center thereof, the output shaft 22 is fixedly connected to the output shaft connecting portion through the second fastening member 5 from above the main body portion 31, and the rotation center of the output shaft 22 is coincided with the rotation center of the main body portion 31. Specifically, the output shaft connecting portion includes a shaft hole 331 extending downward from the upper surface of the main body portion 31, wherein the cross-sectional shape and size of the shaft hole 331 are matched with those of the output shaft 22. Preferably, an interference connection is achieved between the shaft hole 331 and the output shaft 22. Further, referring to Figs. 6 and 8, the sectional shape of the shaft hole 331 and the sectional shape of the output shaft 22 are set to be non-rotationally symmetrical, thus it is possible to limit the rotation of the shaft hole 331 and the output shaft 22 so as not to rotate relative to each other after being assembled. In the present embodiment, the opening of the shaft hole 331 is upward, and the shaft hole 331 extends downward without penetrating through the upper and lower surfaces of the main body portion 31. The bottom of the shaft hole 331 is provided with a first through hole 301, and the lower end surface of the output shaft 22 is provided with a second coupling hole 221, wherein the first through hole 301 corresponds to the second coupling hole 221. The second fastening member 5 is a metal screw which includes a screw head and a screw rod, and the diameter of the screw head is larger than the inner diameter of the first through hole 301, and the diameter of the screw rod is not larger than the inner diameter of the first through hole 301. The screw rod is provided with threads, and the second coupling hole 221 is provided with threads matched with the screw. When the output shaft 22 and the main body portion 31 are fixedly connected, the screw rod passes upward through the first through hole 301 from below the main body portion 31 and then is engaged with the thread in the second coupling hole 221, and the screw head is tightly pressed on the lower surface of the main body portion 31, therefore achieving the fixed connection between the output shaft 22 and the main body portion 31.

In the present embodiment, preferably, referring to Figs. 2, 5 to 7, in order to enhance the coupling strength between the output shaft connecting portion and the output shaft 22, the output shaft connecting portion is configured to include a first cavity extending downward from the upper surface of the main body portion 31, and a connecting member 33 fixedly inserted into the first cavity. The connecting member 33 is a metal material manufactured and molded by powder metallurgy, which is fixedly fitted into the first cavity of the main body portion 31. The connecting member 33 includes an embedded portion 332 close to the lower portion and an extension portion 333 extending upward from the embedded portion 332, wherein the outer diameter of the embedded portion 332 is larger than the outer diameter of the extension portion 333. The connecting member 33 includes a shaft hole 331 extending downward from the upper surface thereof (i.e., the upper surface of the embedding portion 332). The shaft hole 331 penetrates or does not penetrate the upper and lower surfaces of the connecting member 33. When the shaft hole 331 does not penetrate, the bottom surface of the shaft hole 331 is provided with a through hole for the screw rod penetrating through. Accordingly, the main body portion 31 includes a first cavity extending downward from the upper surface thereof, the first cavity having an opening portion relatively close to the upper surface of the main body portion 31 and a chamber portion relatively close to the lower surface of the main body portion 31, wherein the inner diameter of the opening portion is matched with the outer diameter of the extending portion 333,the inner diameter of the chamber portion is matched with the outer diameter of the embedding portion 332, and the outer circumference of the chamber portion is provided with a cavity wall 3103 having a certain thickness. A first through hole 301 is provided in the bottom surface of the chamber portion. In this embodiment, the connecting member 33 is injection molded integrally with the main body portion 31, and inside the first cavity is provided with ribs and/or grooves (not shown) in the radial direction thereof, and correspondingly the connecting member 33 is provided with grooves/ribs (not shown) which cooperate with the ribs and/or grooves in the first cavity, therefore ensuring that relative movement between the connecting member 33 and the main body portion 31 does not occur in both radial and axial directions. Of course, in other embodiments, the connecting member 33 may be made of a high-strength non-metallic material or other materials that satisfy the strength of the connection.

The blade connecting portion is provided on the lower surface of the main body portion 31 at a position close to the edge thereof, and the blade 14 is fixedly connected to the blade connecting portion through the first fastening member 4 from below the main body portion 31. Specifically, the blade connecting portion includes a plurality of first coupling holes 321 extending upward from the lower surface of the main body portion 31. Among the plurality of first coupling holes 321, there are at least two first coupling holes 321, wherein the lines between the centers of the two first coupling holes 321 and the rotation center of the main body portion 31 are not collinear. This arrangement limits the user so that the blade 14 only can be mounted with the preset upward facing side facing upward, and not when the blade 14 is reversed. In the present embodiment, the first coupling holes 321 are provided in two, asymmetrically on both sides of the rotation center of the main body portion 31. Correspondingly, the blade 14 is provided with a second through hole 302 corresponding to the position of the first coupling hole 231. The first fastening member 4 is a bolt made of a metal material, wherein the bolt includes a bolt head and a bolt shank, and the diameter of the bolt head is larger than the diameter of the second through hole 302, and the diameter of the bolt shank is not larger than the diameter of the second through hole 302. The bolt shank is provided with threads, and the first coupling hole 231 is internally provided with threads matched with the bolt. When the blade 14 and the main body portion 31 are fixedly connected, the bolt shank passes upward through the second through hole 302 below the blade 14 and then is engaged with the threads in the first coupling hole 231, and the bolt head abuts against the lower surface of the blade 14, so that the fixed connection between the blade 14 and the main body portion 31 is achieved. In the present embodiment, the blade 14 further includes a third through hole 303, which is disposed at the position close to the rotation center of the blade 14 and corresponds to the first through hole 301, for the second fastening member 5 to pass through. In other embodiments, the second fastening member 5 is completely located above the blade 14, and the blade 14 needs not to be provided with the third through hole 303.

In the present embodiment, preferably, referring to Figs. 2 and 6, the first coupling hole 321 penetrates through the upper surface and the lower surface of the main body portion 31. The outer circumference of the first coupling hole 321 is provided with a hole wall 3211 with a certain thickness, and the hole wall 3211 protrudes upward from the upper surface of the main body portion 31. The outer circumference of the main body portion 31 is provided with a peripheral wall 3101 having a certain thickness, and the peripheral wall 3101 is substantially circular. The side of the hole wall 3211 away from the rotation center of the main body portion 31 is coincided with the peripheral wall 3101, and the side of the hole wall 3211 close to the rotation center of the main body portion 31 is coincided with a cavity wall 3103. A reinforcing rib 3102 extending in the circumferential direction of the main body portion 31 is provided between the peripheral wall 3101 and the cavity wall 3103. Specifically, N first coupling holes 321 divide the reinforcing rib 3102 into N segments, where N is a positive integer not less than 1, and the extension lines of any one segment of the reinforcing rib 3102 to both ends pass through the first coupling holes 321 adjacent thereto. Further, the extension lines of any one segment of the reinforcing ribs 3102 to both ends pass through the geometric center of the first coupling hole 321. The reinforcing rib 3102 is provided on the connecting base 3, so that the load borne by the blade 14 during the operation of the mower can be transmitted to the hole wall 3211 of the first coupling hole 321 through the peripheral wall 3101 and the reinforcing rib 3102 by the first fastening member 4, and then transmitted to the cavity wall 3103, the connecting member 33 and the output shaft 22 of the motor by the hole wall 3211, therefore effectively enhancing the circumferential strength of the connecting base 3, and preventing the connecting member 3 from being broken when the blade 14 of the mower bears a large load.

In the present embodiment, preferably, referring to Figs. 2, 5 to 7, in order to enhance the connection strength between the blade connecting portion and the blade 14, the blade connecting portion is configured to include the first coupling hole 321 extending upward from the lower surface of the main body portion 31, a second cavity provided in the first coupling hole 321, and a nut 32 of a metal material fixedly embedded in the second cavity, the nut 32 having threads engaged with the first fastening member 4. The first coupling hole 321 penetrates or does not penetrate the upper and lower surfaces of the main body portion 31. The nut 32 is integrally injection-molded with the main body portion 31.

In the technical solution of the present embodiment, the output shaft connecting portion is disposed substantially along the rotation center of the main body portion 31, and the blade connecting portions are disposed on both sides of the rotation center of the main body portion 31, so that the output shaft connecting portion is isolated from any one of the blade connecting portions by an insulating material, and the output shaft 22 is coupled to the main body portion 31 from above, and the blade 14 is coupled to the main body portion 31 from below, thereby achieving the insulating coupling between the blade and the output shaft.

In the technical solution of the present embodiment described above, the blade 14 made of the metal material is exposed below the main body portion 31, and the screw head of the second fastening member 5 made of the metal material is also exposed below the main body portion 31, so that there is a risk of electrical conduction between the blade 14 and the second fastening member 5. Referring to Figs. 2-7 and 9, the insulation structure further includes an insulation cover 36 made of an insulating material, wherein the insulation cover 36 provides insulation between the blade 14 and the second fastening member 5. Specifically, the insulation cover 36 includes a cover portion 361 having an inner cavity 3611 with a closed bottom, wherein the outer diameter of the cover portion 361 is adapted to the inner diameter of the third through hole 303, and generally the outer diameter of the cover portion 361 is equal to or slightly smaller than the inner diameter of the third through hole 303, so that the cover portion 361 can pass through the third through hole 303. The inner diameter of the cover portion 361 (i.e., the diameter of the internal cavity 3611) is adapted to the outer diameter of the screw head of the second fastening member 5, and generally the inner diameter of the cover portion 361 is larger than the outer diameter of the screw head of the second fastening member 5, so that the screw head can be received in the internal cavity 3611. Referring to Figs. 2 and 9, the open end of the cover portion 361 has an outwardly extending flange 3610 sandwiched between the upper surface of the blade 14 and the lower surface of the main body portion 31.

The insulation cover 36 and the second fastening member 5 are provided independently of each other, and are detachably connected to the main body portion 31. The insulation cover 36 further comprises at least one first mounting portion, and correspondingly, the main body portion 31 comprises at least one second mounting portion adapted to the first mounting portion. In the present embodiment, the first mounting portion includes arm portions 362 symmetrically extending outward along the flange 3610, and elastic hooks 363 extending upward from outer ends of the arm portions 362. The second mounting portion includes a recessed assembling slot 37 formed in the lower surface of the main body portion 31, the shape of the assembling slot 37 is matched with the shape of the open end of the insulation cover 36, and in particular, the flange 3610 is sandwiched between the upper surface of the blade 14 and the assembling slot 37. The assembling slot 37 further includes slots 311 corresponding to the elastic hooks 363 both in number and position, the slots 311 are provided with protrusions 3111 therein, the elastic hooks 363 are clamped on the protrusions 3111, and the connection between the insulation cover 36 and the main body portion 31 is realized by elastic deformation of the elastic hooks 363 themselves. In the present embodiment, the connection line between the two clamping slots 311 is substantially perpendicular to the connection line between the two first coupling holes 321. In other embodiments, the numbers of the first mounting portions and the second mounting portions are not limited to two, and may be adjusted according to actual needs. In other embodiments, the assembling form of the first mounting portions and the second mounting portions is not limited to the structure using the hook and the clamping slot, and other detachable structures such as a thread matching structure may be adopted according to actual needs, specifically, a form such as providing threads matched with each other on the inner wall of the inner cavity 3611 and the outer circumference of the screw head of the second fastening member may be adopted, as long as the detachable connection between the insulation cover 36 and the main body portion 31, and the insulating and isolating blade 14 and the second fastening member 5 are simultaneously satisfied.

When mounting the mower, the output shaft 22 is inserted into the shaft hole 311 of the connecting base 3; the screw rod of the second fastening member 5 is inserted into the second coupling hole and is screwed tightly after the screw rod penetrates upward through the first through hole 301 from below the connecting base 3, so that the output shaft 22 and the connecting base 3 are fastened and coupled; the first mounting portion of the insulation cover 36 is coupled to the second mounting portion of the main body portion 31, so that the screw head of the second fastening member 5 is covered by the cover portion 361 of the insulation cover 36; the second through hole 302 is made to correspond to the first coupling hole 321, and the cover portion 361 of the insulation cover 36 is passed through the third through hole 303, and the first fastening member 4 is used to fasten and connect the blade 14 and the connecting holder 3, thereby completing the mounting of the mower. At this time, the blade 14 and the second fastening member 5 are isolated from each other by the insulation cover 36, so that not only effective insulation between the blade 14 and the output shaft 22 is ensured, but also a universal screw can be used, thereby improving the universality of parts and reducing the cost. Meanwhile, the insulation cover 36 is an injection molding piece, so that the production process is simple, the cost is low, and the mounting and the replacement are convenient.

In the present embodiment, preferably, the rotation center of the output shaft 22, the rotation center of the main body portion 31, the rotation center of the shaft hole 331, the rotation center of the second fastening member 5, the rotation center of the screw hole 221, the rotation center of the first through hole 301, and the rotation center of the third through hole 303 concide.

### Embodiment 2

The present embodiment is substantially the same as embodiment 1, and only differences from embodiment 1 will be described in the present embodiment for the sake of brevity.

The insulation cover 36 is provided integrally with the second fastening member 5. Specifically, the insulation cover 36 is molded by integral injection molding to cover the screw head of the second fastening member 5. Compared with embodiment 1, the present embodiment can eliminate the first mounting portion and the second mounting portion.

Further, the second fastening member 5 is a screw having a non-standard screw head, and accordingly, the cover portion of the insulation cover 36 has a non-standard sectional shape. That is, the second fastening member 5 cannot be attached and detached using a general-purpose tool (e.g., a general wrench, a general screwdriver, etc.), and it is necessary to use a tool having a specific shape to attach and detach the second fastening member 5.

It is to be understood that although the specification has been described in terms of embodiments, not each embodiment only contains an independent technical solution, and such recitation is merely for purposes of clarity.

The above detailed description is only specific to the possible embodiments of the present invention, and is not intended to limit the scope of the present invention.

## Claims

1. An insulation structure for an electric gardening tool (1), wherein the electric gardening tool (1) comprises:
a housing;
a motor (2) which is arranged in the housing and used for providing power, wherein the motor (2) comprises an output shaft (22); and
a blade (14) which is connected with the output shaft (22), wherein the motor (2) drives the blade (14) to rotate through the output shaft (22);
wherein the insulation structure is arranged between the output shaft (22) and the blade (14) so as to realize the insulation coupling of the blade (14) and the output shaft (22), wherein the insulation structure comprises a connecting base (3), wherein the connecting base (3) comprises a main body portion (31) made of insulation materials, and the main body portion (31) is provided with an output shaft connecting portion in fastening coupling with the output shaft (22) and at least two blade connecting portions in fastening coupling with the blade (14), wherein the output shaft connecting portion and any one of the blade connecting portions are insulated and isolated from each other, wherein the output shaft (22) is fixedly connected to the output shaft connecting portion through a second fastening member (5) and the blade (14) is fixedly connected to the blade connecting portions through at least two first fastening members (4)
**characterized in that** the insulation structure further comprises an insulation cover (36) made of an insulation material, the insulation cover (36) being disposed between the second fastening member (5) and the blade (14) to realize the insulation between the second fastening member (5) and the blade (14).

2. The insulation structure according to claim 1, **characterized in that** the output shaft (22) is coupled to the output shaft connecting portion from a first side of the connecting base (3), and the second fastening member (5) is coupled to the output shaft (22) after penetrating through the connecting base (3) from a second side of the connecting base (3) to the first side, wherein the insulation cover (36) forms an inner cavity (3611) and the part of the second fastening member (5) which protrudes towards the second side out of the surface of the main body portion (31) is accommodated in the inner cavity (3611), wherein the surface facing the second side, and the blade (14) is isolated from the outer part of the inner cavity (3611).

3. The insulation structure according to claim 2, **characterized in that** the insulation cover (36) is detachably connected to the second fastening member (5).

4. The insulation structure according to claim 3, **characterized in that** the insulation cover (36) has at least one elastic hook (363), and the main body portion (31) includes at least one clamping slot (311), wherein the elastic hook (363) is detachably matched and connected with the clamping slot (311).

5. The insulation structure according to claim 2, **characterized in that** the insulation cover (36) is undetachably connected to the second fastening member (5).

6. The insulation structure according to claim 1, **characterized in that** the output shaft (22) is coupled to the output shaft connecting portion from a first side of the connecting base (3) and the blade (14) is coupled to the blade connecting portion from a second side of the connecting base (3).

7. The insulation structure according to claim 6, **characterized in that** the output shaft connecting portion includes a shaft hole (331) extending from the surface of the main body portion (31) to the second side, the surface facing the first side, and the shaft hole (331) is matched and connected with the output shaft (22).

8. The insulation structure according to claim 6, **characterized in that** the output shaft connecting portion is configured to include a first cavity extending from the surface, facing the first side, of the main body portion (31) to the second side, and a connecting member (33) fixedly embedded into the first cavity, wherein the connecting member (33) includes a shaft hole (331) extending from the surface, facing the first side, of the connecting member (33) to the second side.

9. The insulation structure according to any one of claims 7 to 8, **characterized in that** a first through hole (301) is provided below the shaft hole (331), wherein the output shaft (22) comprises a second coupling hole (221) extending from the end surface of the output shaft (22) toward the first side, the end surface facing the second side, wherein in use the first through hole (301) corresponds to the second coupling hole (221) and at least part of the second fastening member (5) is matched and connected with the second coupling hole (221) after penetrating through the first through hole (301).

10. The insulation structure according to claim 8, **characterized in that** the connecting member (33) is made of metal, and the connecting member (33) and the main body portion (31) are integrally injection molded, wherein the connecting member (33) comprises an embedded portion (332) and an extending portion (333) extending from the embedded portion (332) to the first side, and the outer diameter of the embedded portion (332) is larger than that of the extending portion (333), wherein the first cavity comprises a cavity portion and an opening portion, the inner diameter of the cavity portion is matched with the outer diameter of the embedded portion (332), and the inner diameter of the opening portion is matched with the outer diameter of the extending portion (333).

11. The insulation structure according to claim 6, **characterized in that** the blade connecting portion includes a plurality of first coupling holes (321) extending from the surface of the main body portion (31) to the first side, the surface facing the second side, wherein the inner circumferences of the first coupling holes (321) and the outer circumferences of the first fastening members (4) are provided with threads for engaging with each other, wherein in use the blade (14) comprises second through holes (302) corresponding to the first coupling holes (321) and at least part of the first fastening members (4) are matched and connected with the first coupling holes (321) after penetrating through the second through holes (302).

12. The insulation structure according to claim 11, **characterized in that** among the plurality of first coupling holes (321), the lines between the centres of at least two first coupling holes (321) and the rotation center of the main body portion (31) are not collinear.

13. The insulation structure according to claim 11, **characterized in that** the outer circumference of the main body portion (31) is provided with a peripheral wall (3101), and the outer circumferences of the first coupling holes (321) are provided with hole walls (3211), wherein a reinforcing rib (3102) is arranged on one side of the peripheral wall (3101) close to the rotation center of the main body portion (31) and the reinforcing rib (3102) extends along the circumferential direction of the main body portion (31), wherein the reinforcing rib (3102) is divided into a plurality of sections by the first coupling holes (321), and the extension line from any section of the reinforcing rib (3102) to both ends passes through the first coupling holes (321).

14. The insulation structure according to claim 13, **characterized in that** the extension line from any section of the reinforcing rib (3102) to both ends passes through the geometric centers of the first coupling holes (321).

15. The insulation structure according to claim 6, **characterized in that** the blade connecting portion is configured to include a first coupling hole (321) extending from the surface of the main body portion (31) to the first side, the surface facing the second side, a second cavity provided in the first coupling hole (321) and a nut (32) fixedly embedded into the second cavity, wherein the nut (32) is made of metal material and is provided with threads meshed with the first fastening member (4), wherein the nut (32) and the main body portion (31) are integrally formed in an injection molding mode.

16. A mower (1) is **characterized by** comprising the insulation structure according to any one of claims 1-15.

## Patentansprüche

1. Isolationsstruktur für ein elektrisches Gartengerät (1), wobei das elektrische Gartengerät (1) umfasst:
ein Gehäuse;
einen Motor (2), der in dem Gehäuse angeordnet ist und zur Bereitstellung von Energie verwendet wird, wobei der Motor (2) eine Ausgangswelle (22) umfasst; und
ein Messer (14), das mit der Ausgangswelle (22) verbunden ist, wobei der Motor (2) das Messer (14) antreibt, um sich durch die Ausgangswelle (22) zu drehen;
wobei die Isolationsstruktur zwischen der Ausgangswelle (22) und dem Messer (14) angeordnet ist, um die Isolationskopplung des Messers (14) und der Ausgangswelle (22) zu realisieren, wobei die Isolationsstruktur eine Verbindungsbasis (3) umfasst, wobei die Verbindungsbasis (3) einen Hauptkörperabschnitt (31) umfasst, der aus Isolationsmaterialien hergestellt ist, und wobei der Hauptkörperabschnitt (31) mit einem Ausgangswellenverbindungsabschnitt in Befestigungskopplung mit der Ausgangswelle (22) und mindestens zwei Messerverbindungsabschnitten in Befestigungskopplung mit dem Messer (14) versehen ist, wobei der Ausgangswellenverbindungsabschnitt und einer der Messerverbindungsabschnitte isoliert und voneinander getrennt sind, wobei die Ausgangswelle (22) fest mit dem Ausgangswellenverbindungsabschnitt durch ein zweites Befestigungselement (5) verbunden ist und das Messer (14) fest mit den Messerverbindungsabschnitten durch mindestens zwei erste Befestigungselemente (4) verbunden ist,
**dadurch gekennzeichnet, dass** die Isolationsstruktur darüber hinaus eine Isolationsabdeckung (36) umfasst, die aus einem Isolationsmaterial hergestellt ist, wobei die Isolationsabdeckung (36) zwischen dem zweiten Befestigungselement (5) und dem Messer (14) angeordnet ist, um die Isolation zwischen dem zweiten Befestigungselement (5) und dem Messer (14) zu realisieren.

2. Isolationsstruktur nach Anspruch 1, **dadurch gekennzeichnet, dass** die Ausgangswelle (22) mit dem Ausgangswellenverbindungsabschnitt von einer ersten Seite der Verbindungsbasis (3) gekoppelt ist, und wobei das zweite Befestigungselement (5) mit der Ausgangswelle (22) gekoppelt wird, nachdem es durch die Verbindungsbasis (3) von einer zweiten Seite der Verbindungsbasis (3) zu der ersten Seite durchgedrungen ist, wobei die Isolationsabdeckung (36) einen inneren Hohlraum (3611) bildet, und wobei der Teil des zweiten Befestigungselements (5), der in Richtung der zweiten Seite aus der Oberfläche des Hauptkörperabschnitts (31) herausragt, in dem inneren Hohlraum (3611) aufgenommen ist, wobei die Oberfläche der zweiten Seite zugewandt ist, und wobei das Messer (14) von dem äußeren Teil des inneren Hohlraums (3611) isoliert ist.

3. Isolationsstruktur nach Anspruch 2, **dadurch gekennzeichnet, dass** die Isolationsabdeckung (36) lösbar mit dem zweiten Befestigungselement (5) verbunden ist.

4. Isolationsstruktur nach Anspruch 3, **dadurch gekennzeichnet, dass** die Isolationsabdeckung (36) mindestens einen elastischen Haken (363) aufweist, und wobei der Hauptkörperabschnitt (31) mindestens einen Klemmschlitz (311) aufweist, wobei der elastische Haken (363) lösbar an den Klemmschlitz (311) angepasst und mit diesem verbunden ist.

5. Isolationsstruktur nach Anspruch 2, **dadurch gekennzeichnet, dass** die Isolationsabdeckung (36) unlösbar mit dem zweiten Befestigungselement (5) verbunden ist.

6. Isolationsstruktur nach Anspruch 1, **dadurch gekennzeichnet, dass** die Ausgangswelle (22) mit dem Ausgangswellenverbindungsabschnitt von einer ersten Seite der Verbindungsbasis (3) aus gekoppelt ist, und wobei das Messer (14) mit dem Messerverbindungsabschnitt von einer zweiten Seite der Verbindungsbasis (3) aus gekoppelt ist.

7. Isolationsstruktur nach Anspruch 6, **dadurch gekennzeichnet, dass** der Ausgangswellenverbindungsabschnitt ein Wellenloch (331) aufweist, das sich von der Oberfläche des Hauptkörperabschnitts (31) zu der zweiten Seite erstreckt, wobei die Oberfläche der ersten Seite zugewandt ist, und wobei das Wellenloch (331) an die Ausgangswelle (22) angepasst und mit dieser verbunden ist.

8. Isolationsstruktur nach Anspruch 6, **dadurch gekennzeichnet, dass** der Ausgangswellenverbindungsabschnitt so ausgestaltet ist, dass er einen ersten Hohlraum, der sich von der der ersten Seite zugewandten Oberfläche des Hauptkörperabschnitts (31) zu der zweiten Seite erstreckt, und ein Verbindungselement (33), das fest in den ersten Hohlraum eingebettet ist, aufweist, wobei das Verbindungselement (33) ein Wellenloch (331) aufweist, das sich von der der ersten Seite zugewandten Oberfläche des Verbindungselements (33) zu der zweiten Seite erstreckt.

9. Isolationsstruktur nach einem der Ansprüche 7 bis 8, **dadurch gekennzeichnet, dass** ein erstes Durchgangsloch (301) unterhalb des Wellenlochs (331) vorhanden ist, wobei die Ausgangswelle (22) ein zweites Kopplungsloch (221) umfasst, das sich von der Endfläche der Ausgangswelle (22) zu der ersten Seite hin erstreckt, wobei die Endfläche der zweiten Seite zugewandt ist, wobei im Gebrauch das erste Durchgangsloch (301) mit dem zweiten Kopplungsloch (221) korrespondiert, und wobei zumindest ein Teil des zweiten Befestigungselements (5) an das zweite Kopplungsloch (221) angepasst und mit diesem verbunden wird, nachdem es durch das erste Durchgangsloch (301) durchgedrungen ist.

10. Isolationsstruktur nach Anspruch 8, **dadurch gekennzeichnet, dass** das Verbindungselement (33) aus Metall hergestellt ist, und wobei das Verbindungselement (33) und der Hauptkörperabschnitt (31) ganzheitlich spritzgegossen sind, wobei das Verbindungselement (33) einen eingebetteten Abschnitt (332) und einen sich von dem eingebetteten Abschnitt (332) zu der ersten Seite erstreckenden Verlängerungsabschnitt (333) umfasst, und wobei der Außendurchmesser des eingebetteten Abschnitts (332) größer als der des Verlängerungsabschnitts (333) ist, wobei der erste Hohlraum einen Hohlraumabschnitt und einen Öffnungsabschnitt umfasst, wobei der Innendurchmesser des Hohlraumabschnitts an den Außendurchmesser des eingebetteten Abschnitts (332) angepasst ist, und wobei der Innendurchmesser des Öffnungsabschnitts an den Außendurchmesser des Verlängerungsabschnitts (333) angepasst ist.

11. Isolationsstruktur nach Anspruch 6, **dadurch gekennzeichnet, dass** der Messerverbindungsabschnitt eine Vielzahl von ersten Kopplungslöchern (321) aufweist, die sich von der Oberfläche des Hauptkörperabschnitts (31) zu der ersten Seite erstrecken, wobei die Oberfläche der zweiten Seite zugewandt ist, wobei die Innenumfänge der ersten Kopplungslöcher (321) und die Außenumfänge der ersten Befestigungselemente (4) mit Gewinden zum miteinander in Eingriff kommen versehen sind, wobei das Messer (14) im Gebrauch zweite Durchgangslöcher (302) umfasst, die mit den ersten Kopplungslöchern (321) korrespondieren, und wobei mindestens ein Teil der ersten Befestigungselemente (4) an die ersten Kopplungslöcher (321) angepasst und mit diesen verbunden wird, nachdem sie durch die zweiten Durchgangslöcher (302) hindurchgedrungen sind.

12. Isolationsstruktur nach Anspruch 11, **dadurch gekennzeichnet, dass** bei der Vielzahl der ersten Kopplungslöcher (321) die Linien zwischen den Zentren von mindestens zwei ersten Kopplungslöchern (321) und dem Rotationszentrum des Hauptkörperabschnitts (31) nicht kollinear sind.

13. Isolationsstruktur nach Anspruch 11, **dadurch gekennzeichnet, dass** der Außenumfang des Hauptkörperabschnitts (31) mit einer Umfangswand (3101) versehen ist, und wobei die Außenumfänge der ersten Kopplungslöcher (321) mit Lochwänden (3211) versehen sind, wobei eine Verstärkungsrippe (3102) auf einer Seite der Umfangswand (3101) nahe dem Rotationszentrum des Hauptkörperabschnitts (31) angeordnet ist, und wobei sich die Verstärkungsrippe (3102) entlang der Umfangsrichtung des Hauptkörperabschnitts (31) erstreckt, wobei die Verstärkungsrippe (3102) durch die ersten Kopplungslöcher (321) in eine Vielzahl von Abschnitten unterteilt ist, und wobei die Verlängerungslinie von jedem Abschnitt der Verstärkungsrippe (3102) zu beiden Enden durch die ersten Kopplungslöcher (321) verläuft.

14. Isolationsstruktur nach Anspruch 13, **dadurch gekennzeichnet, dass** die Verlängerungslinie von einem beliebigen Abschnitt der Verstärkungsrippe (3102) zu beiden Enden durch die geometrischen Mittelpunkte der ersten Kopplungslöcher (321) verläuft.

15. Isolationsstruktur nach Anspruch 6, **dadurch gekennzeichnet, dass** der Messerverbindungsabschnitt so ausgestaltet ist, dass er ein erstes Kopplungsloch (321), das sich von der Oberfläche des Hauptkörperabschnitts (31) zu der ersten Seite erstreckt, wobei die Oberfläche der zweiten Seite zugewandt ist, einen zweiten Hohlraum, der in dem ersten Kopplungsloch (321) vorhanden ist, und eine Mutter (32), die fest in den zweiten Hohlraum eingebettet ist, aufweist, wobei die Mutter (32) aus einem Metallmaterial hergestellt ist und mit Gewinden versehen ist, die mit dem ersten Befestigungselement (4) in Eingriff stehen, wobei die Mutter (32) und der Hauptkörperabschnitt (31) in einem Spritzgussverfahren ganzheitlich ausgebildet sind.

16. Mäher (1), **dadurch gekennzeichnet, dass** er die Isolationsstruktur nach einem der Ansprüche 1-15 umfasst.

## Revendications

1. Structure d'isolation pour un outil de jardinage électrique (1), où l'outil de jardinage électrique (1) comprend :
un boîtier ;
un moteur (2) qui est agencé dans le boîtier et utilisé pour fournir la puissance, où le moteur (2) comprend un arbre de sortie (22) ; et
une lame (14) qui est raccordée avec l'arbre de sortie (22), où le moteur (2) entraîne la lame (14) pour qu'elle tourne par le biais de l'arbre de sortie (22) ;
où la structure d'isolation est agencée entre l'arbre de sortie (22) et la lame (14) afin de réaliser le couplage d'isolation de la lame (14) et de l'arbre de sortie (22), où la structure d'isolation comprend une base de raccordement (3), où la base de raccordement (3) comprend une partie de corps principal (31) réalisée avec des matériaux d'isolation, et la partie de corps principal (31) est prévue avec une partie de raccordement d'arbre de sortie en couplage par fixation avec l'arbre de sortie (22) et au moins deux parties de raccordement de lame en couplage par fixation avec la lame (14), où la partie de raccordement d'arbre de sortie et l'une quelconque des parties de raccordement de lame sont isolées et isolées les unes des autres, où l'arbre de sortie (22) est raccordé, de manière fixe, à la partie de raccordement d'arbre de sortie par le biais d'un second organe de fixation (5) et la lame (14) est raccordée, de manière fixe, aux parties de raccordement de lame par le biais d'au moins deux premiers organes de fixation (4),
la structure d'isolation étant **caractérisée en ce qu'**elle comprend en outre un couvercle d'isolation (36) réalisé avec un matériau d'isolation, le couvercle d'isolation (36) étant disposé entre le second organe de fixation (5) et la lame (14) pour réaliser l'isolation entre le second organe de fixation (5) et la lame (14).

2. Structure d'isolation selon la revendication 1, **caractérisée en ce que** l'arbre de sortie (22) est couplé à la partie de raccordement d'arbre de sortie à partir d'un premier côté de la base de raccordement (3), et le second organe de fixation (5) est couplé à l'arbre de sortie (22) après avoir pénétré dans la base de raccordement (3) depuis un second côté de la base de raccordement (3) jusqu'au premier côté, dans laquelle le couvercle d'isolation (36) forme une cavité interne (3611) et la partie du second organe de fixation (5) qui fait saillie vers le second côté hors de la surface de la partie de corps principal (31) est logée dans la cavité interne (3611), dans laquelle la surface faisant face au second côté, et la lame (14) est isolée de la partie externe de la cavité interne (3611).

3. Structure d'isolation selon la revendication 2, **caractérisée en ce que** le couvercle d'isolation (36) est raccordé, de manière détachable, au second organe de fixation (5).

4. Structure d'isolation selon la revendication 3, **caractérisée en ce que** le couvercle d'isolation (36) a au moins un crochet élastique (363), et la partie de corps principal (31) comprend au moins une fente de serrage (311), dans laquelle le crochet élastique (363) correspond et est raccordé, de manière détachable, avec la fente de serrage (311).

5. Structure d'isolation selon la revendication 2, **caractérisée en ce que** le couvercle d'isolation (36) est raccordé, de manière non détachable, au second organe de fixation (5).

6. Structure d'isolation selon la revendication 1, **caractérisée en ce que** l'arbre de sortie (22) est couplé à la partie de raccordement d'arbre de sortie depuis un premier côté de la base de raccordement (3) et la lame (14) est couplée à la partie de raccordement de lame depuis un second côté de la base de raccordement (3).

7. Structure d'isolation selon la revendication 6, **caractérisée en ce que** la partie de raccordement d'arbre de sortie comprend un trou d'arbre (331) s'étendant à partir de la surface de la partie de corps principal (31) jusqu'au second côté, la surface faisant face au premier côté, et le trou d'arbre (331) correspond et est raccordé avec l'arbre de sortie (22).

8. Structure d'isolation selon la revendication 6, **caractérisée en ce que** la partie de raccordement d'arbre de sortie est configurée pour comprendre une première cavité s'étendant à partir de la surface, faisant face au premier côté, de la partie de corps principal (31) jusqu'au second côté, et un organe de raccordement (33) fixement encastré dans la première cavité, dans laquelle l'organe de raccordement (33) comprend un trou d'arbre (331) s'étendant à partir de la surface, faisant face au premier côté, de l'organe de raccordement (33) jusqu'au second côté.

9. Structure d'isolation selon l'une quelconque des revendications 7 à 8, **caractérisée en ce qu'**un premier trou débouchant (301) est prévu au-dessous du trou d'arbre (331), dans laquelle l'arbre de sortie (22) comprend un second trou de couplage (221) s'étendant à partir de la surface d'extrémité de l'arbre de sortie (22) vers le premier côté, la surface d'extrémité faisant face au second côté, dans laquelle, à l'usage, le premier trou débouchant (301) correspond au second trou de couplage (221) et au moins une partie du second organe de fixation (5) correspond et est raccordée au second trou de couplage (221) après pénétration dans le premier trou débouchant (301) .

10. Structure d'isolation selon la revendication 8, **caractérisée en ce que** l'organe de raccordement (33) est réalisé à partir de métal, et l'organe de raccordement (33) et la partie de corps principal (31) sont moulés par injection, de manière solidaire, dans laquelle l'organe de raccordement (33) comprend une partie encastrée (332) et une partie d'extension (333) s'étendant à partir de la partie encastrée (332) jusqu'au premier côté, et le diamètre externe de la partie encastrée (332) est supérieur à celui de la partie d'extension (333), dans laquelle la première cavité comprend une partie de cavité et une partie d'ouverture, le diamètre interne de la partie de cavité correspond au diamètre externe de la partie encastrée (332), et le diamètre interne de la partie d'ouverture correspond au diamètre externe de la partie d'extension (333) .

11. Structure d'isolation selon la revendication 6, **caractérisée en ce que** la partie de raccordement de lame comprend une pluralité de premiers trous de couplage (321) s'étendant à partir de la surface de la partie de corps principal (31) jusqu'au premier côté, la surface faisant face au second côté, dans laquelle les circonférences internes des premiers trous de couplage (321) et les circonférences externes des premiers organes de fixation (4) sont prévus avec des filetages pour se mettre en prise entre eux, dans laquelle, à l'usage, la lame (14) comprend deux trous débouchants (302) correspondant aux premiers trous de couplage (321) et au moins une partie des premiers organes de fixation (4) correspond et est raccordée avec les premiers trous de couplage (321) après pénétration dans les seconds trous débouchants (302).

12. Structure d'isolation selon la revendication 11, **caractérisée en ce que**, parmi la pluralité de premiers trous de couplage (321), les lignes entre les centres d'au moins deux premiers trous de couplage (321) et le centre de rotation de la partie de corps principal (31) ne sont pas colinéaires.

13. Structure d'isolation selon la revendication 11, **caractérisée en ce que** la circonférence externe de la partie de corps principal (31) est prévue avec une paroi périphérique (3101), et les circonférences externes des premiers trous de couplage (321) sont prévues avec des parois de trou (3211), dans laquelle une nervure de renforcement (3102) est agencée sur un côté de la paroi périphérique (3101) à proximité du centre de rotation de la partie de corps principal (31) et la nervure de renforcement (3102) s'étend le long de la direction circonférentielle de la partie de corps principal (31), dans laquelle la nervure de renforcement (3102) est divisée en une pluralité de sections par les premiers trous de couplage (321), et la ligne d'extension, allant de n'importe quelle section de la nervure de renforcement (3102) jusqu'aux deux extrémités, passe par les premiers trous de couplage (321).

14. Structure d'isolation selon la revendication 13, **caractérisé en ce que** la ligne d'extension allant de n'importe quelle section de la nervure de renforcement (3102) jusqu'aux deux extrémités, passe par les centres géométriques des premiers trous de couplage (321).

15. Structure d'isolation selon la revendication 6, **caractérisée en ce que** la partie de raccordement de lame est configurée pour comprendre un premier trou de couplage (321) s'étendant à partir de la surface de la partie de corps principal (31) jusqu'au premier côté, la surface faisant face au second côté, une seconde cavité prévue dans le premier trou de couplage (321) et un écrou (32) encastré, de manière fixe, dans la seconde cavité, dans laquelle l'écrou (32) est réalisé à partir d'un matériau métallique, et est prévu avec des filetages engrenés avec le premier organe de fixation (4), dans laquelle l'écrou (32) et la partie de corps principal (31) sont formés, de manière solidaire, dans un mode de moulage par injection.

16. Tondeuse (1) **caractérisée en ce qu'**elle comprend la structure d'isolation selon l'une quelconque des revendications 1 à 15.
